# EUROPEAN PATENT APPLICATION

(11) **EP 3 451 658 A1**
(43) Date of publication of application: **06.03.2019**
(21) Application number: 16900647.5
(22) Date of filing: 07.09.2016
(51) Int. Cl.: H04N 9/31, H04N 7/167, G06F 7/00

(54) **SYSTEM FOR HIGH-RESOLUTION CONTENT PLAYBACK**

(30) Priority: 29.04.2016 RU 2016116993
(71) Applicant: Limited Liability Company "Fulldome Film Society", Moscow, 107031 (RU)
(72) Inventor: AISTOV, Georgiy Viktorovich, St. Petersburg, 194156 (RU)
(74) Representative: Benatov, Samuil Gabriel
(86) International application number: PCT/RU2016/000609
(87) International publication number: WO 2017/188848

(57) **Abstract**

The group of inventions relates to forming and displaying an image on curved screens using projectors, and is applicable in domed multiple projection systems, full dome theatres, planetariums, different simulators and virtual reality. The claimed device comprises a server, a camera, a module for remote control and switching. A plurality of projectors can be connected to a single server with the aid of image separating devices. The inventions make it possible to combine several information display devices to produce a single synchronized image while preventing visible overlaps, differences in colour and light intensity or parasitic flares between fragments generated by different projectors or digital screens. The inventions also provide: the possibility of playing back a high-resolution encoded video stream and a multichannel audio stream; the possibility of capturing and displaying high-resolution audio and video in real-time and working with licenses which allow playback of an encoded video stream.

## Description

This invention is related to generating and displaying picture on a screen using a projector. It can be used in dome projection systems, simulators and virtual reality systems.

### BACKGROUND

### Prior art discloses the following technical solutions.

Prior art discloses a camera-based automatic calibration system for multiprojector systems, which compensates for geometric distortions on the screen's curvilinear surface, color gamut differences, and white and black balance in overlay areas (US patent application No. 2014313423, 23.10.2014). Prior art discloses a multimedia content encryption method (Taiwan patent No. 201448577, 16.12.2014), in which a random fragment of content is selected and encrypted, and a key for the fragment is generated. A license file is created based on the identification information of the fragment's file. Prior art also discloses a content playback system (USA patent No. 9117389, 25.08.2015), including tools for content playback on a spherical screen with data preprocessing and correction of distortions caused by the curvilinear surface of the screen.

The prior art has the following drawbacks:
1. A lack of full automatic calibration.
2. Complex hardware (filters) for compensation of ambient light.
3. The need to cut and play back a frame on each projector separately using a dedicated server for each projector.
4. The need to use powerful and expensive devices.
5. Complex control.
6. A lack of or poor-quality real-time image capturing feature.
7. No content encryption.

### SUMMARY

The purpose of this group of inventions is to combine multiple information display devices into a single synchronized picture and eliminate visible overlay areas, color differences, light intensity, and ambient light between fragments created by different projectors or digital screens. The ability to play back encrypted high-resolution video stream and multichannel audio stream. The ability to capture high-resolution audio and video in real time and display them on a screen. The ability to use licenses which allow to play back an encrypted video stream a limited number of times or in time-constrained mode and with high quality.

The technical effect achievable with this group of inventions is a better quality of licensed content playback on curvilinear surfaces, increased computer performance due to CPU core load balancing, honoring the codec's maximum frame resolution, automated calibration of geometric distortion, smooth transitions between projectors, as well as balancing of brightness, gamut and ambient light.

To achieve a high-quality image on a dome screen, numerous projectors are used, each of which projects a fragment of the image onto the screen. Information on the image being projected is transferred to the projectors directly from the computer or via devices which fragmentize the image. To eliminate visible borders between fragments created by different projectors, the device was equipped with mechanisms for entering information on the image received on the screen into the computer, while the computer was adapted to receive this information, process it, and display on the projector an image that has been vertically synchronized and corrected for overlays, ambient light, differences in color gamut, uneven light flux distribution, and screen irregularity.

The claimed technical effect is achieved due to the architecture of the appliance for playing back licensed high-resolution content on a curvilinear surface, including a computer with a video input to receive source video image, at least two projectors connected to the computer using cables (VGA, HDMI, DVI, SDI, HDBaseT, etc.), a screen with a curvilinear surface, at least one mechanism for obtaining test images while transferring content from projectors to screens, a remote control system, at least one processor which supports dividing a source frame into two or more parts and subsequent encoding of these parts using a codec, encrypting each part of the video image with at least one license key, packaging all encrypted video parts into a single file, a memory device to store the packaged file, a machine-readable media with the license file, unpackaging tool, a file decoding module and an autocalibration module which supports creating filters for each projector to compensate light intensity in overlay areas, a shader to compensate geometric distortions on the screen's surface, a filter to compensate ambient light, a filter to compensate color gamut differences, a memory device to store obtained filters and a playback module.

The claimed technical effect is also achieved due to the method of licensed high-resolution content playback, including steps for obtaining source video content, dividing it into frames, subdividing each frame into at least two parts, encoding each part with a codec and encrypting it with at least one license key, packaging all encrypted parts into a single file, recording it to the memory device, connecting this memory device with the recorded file along with the memory device which holds a license file for the recorded file, unpacking and decoding the recorded file, transferring the decoded stream to the autocalibration module which creates for each projector a filter to compensate for light intensity in overlay areas, and a shader to compensate for geometric distortions on the screen's surface. At the first stage of geometry calibration, flare spot borders are determined for each projector; based on that data, masks which distinguish a part of the whole image for each projector, a filter to compensate for ambient light from projectors, and a filter to compensate for color gamut differences are built, the corresponding filters are applied to each projector, and the corresponding parts of the video frames are projected onto the screen from each projector.

When projectors are located in such a way that they cover the entire surface of a dome screen, overlay areas are formed, which inevitably become zones of higher brightness. Projecting onto a spherical surface also creates geometrical distortions which cause uneven light flux distribution. Projectors can also have different color gamuts, light intensity, inaccurate position relative to the screen, and foreign or specially created obstacles in the path of the projector rays. All these factors can be determined at the calibration stage and compensated for using hardware and software in automatic or semi-automatic mode. This allows to create shaders to play back high-resolution video streams in real time using multiple filters. Depending on the total resolution, the source video is cut into several parts to achieve even CPU core load distribution and comply with the codec's maximum frame resolution. The decoding module can open encrypted files and transfer the decoded stream for further processing.

### BRIEF DESCRIPTION OF THE DRAWINGS

The solution is further explained using references to figures which show the following:
Fig. 1. General view of the multi-projector system automatic calibration and licensed content playback system.
Fig. 2. Arrangement of four projectors for projecting onto a spherical screen.

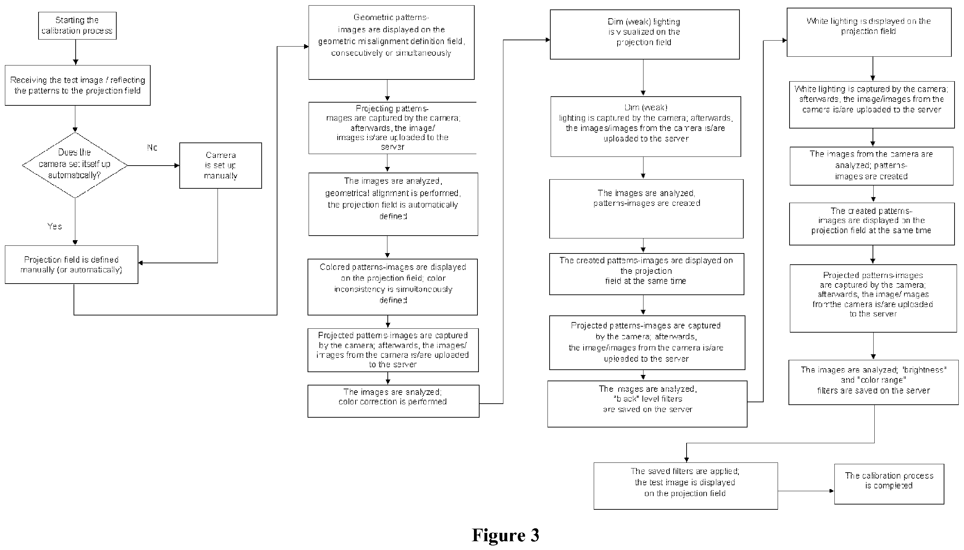

Fig. 3. Multi-projector system automatic calibration flow-chart.

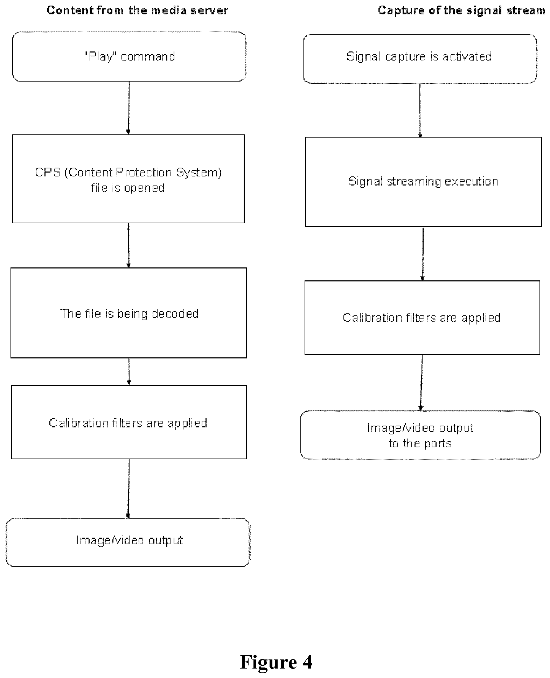

Fig. 4. Licensed content playback mechanism flow chart.

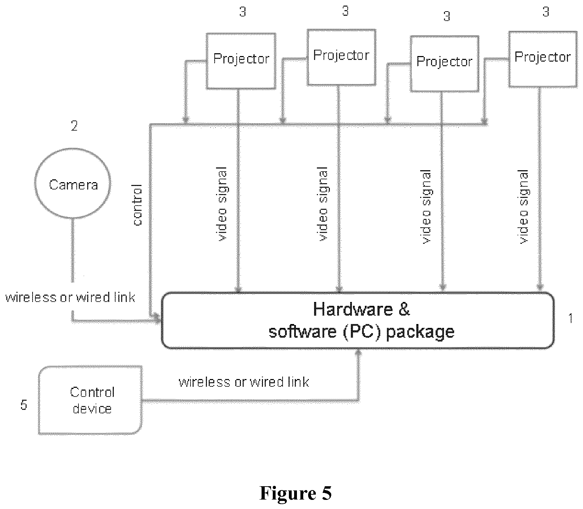

Fig. 5. Licensed content playback system flow chart.

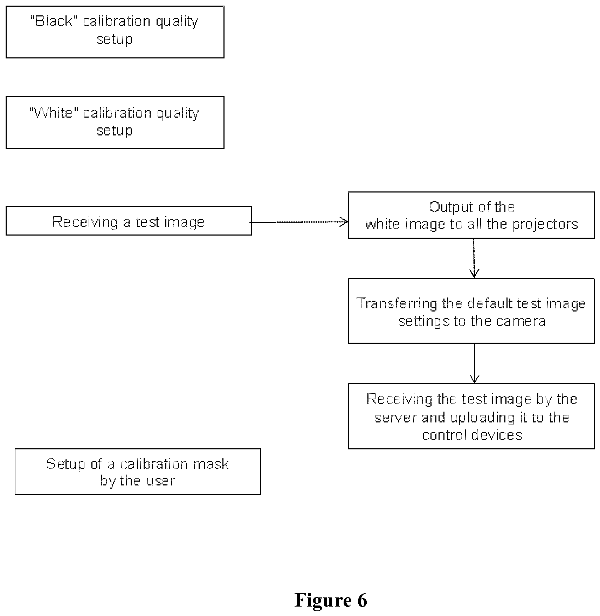

Fig. 6. Calibration setup flow chart.

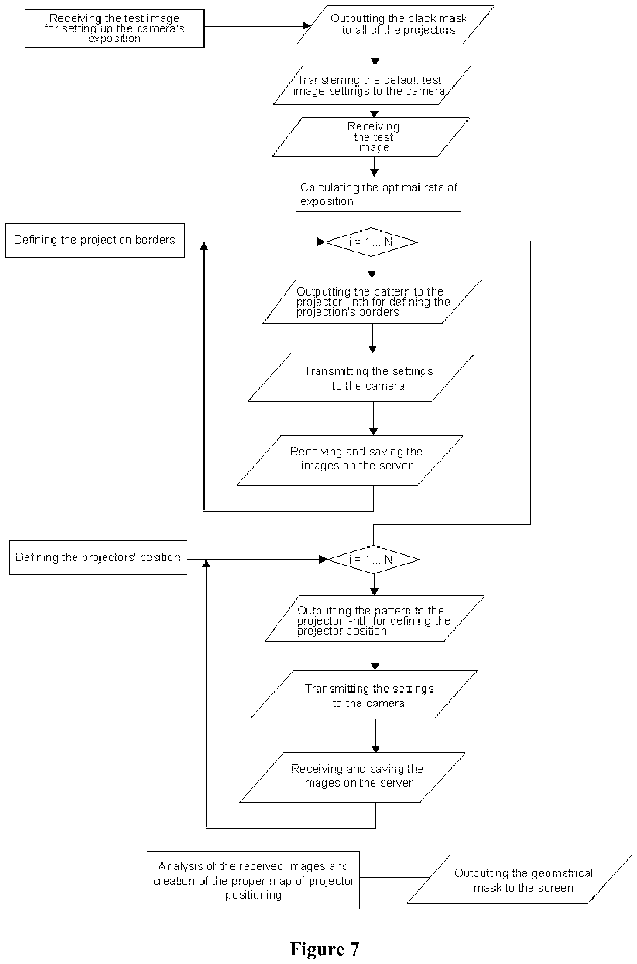

Fig. 7. Geometry calibration flow chart.

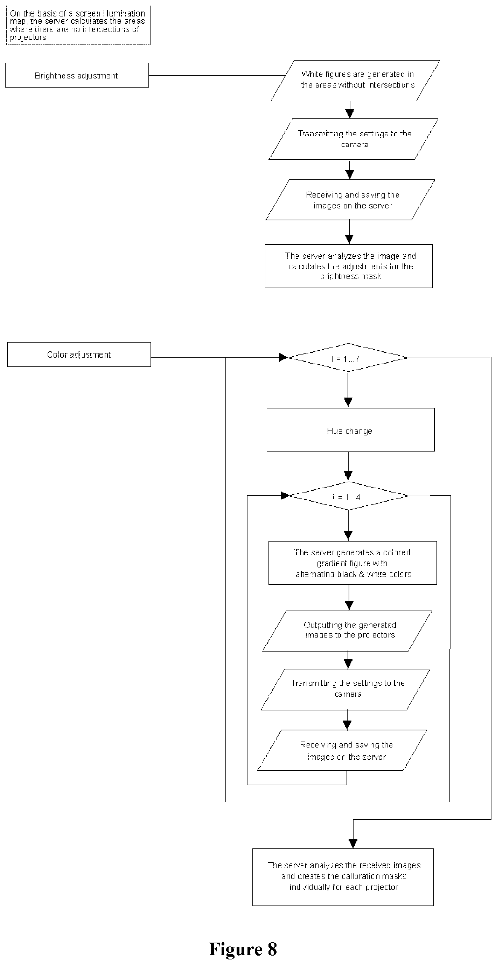

Fig. 8. Color calibration flow chart.

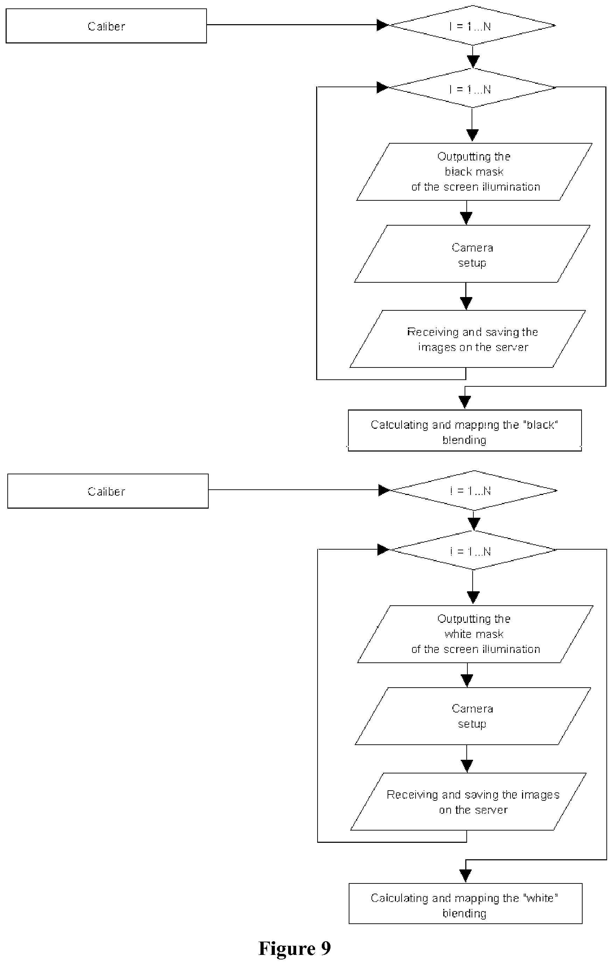

Fig. 9. Transition calibration flow chart.

### DETAILED DESCRIPTION OF THE PREFERRED EMBODIMENT

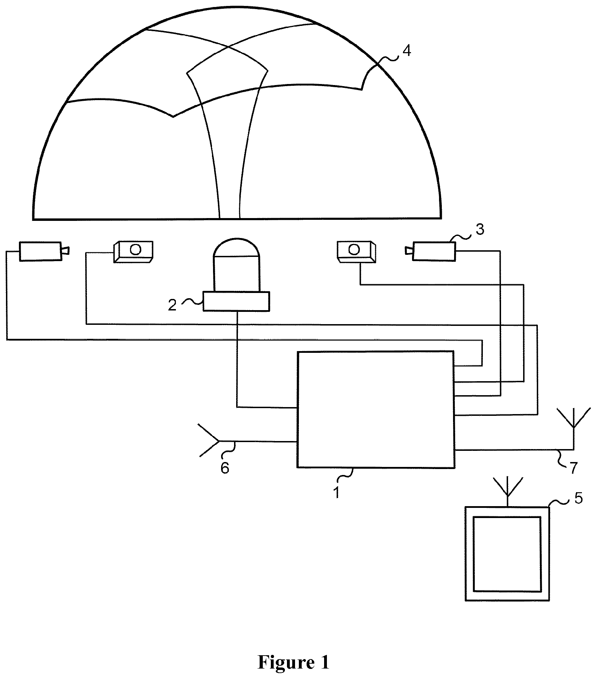

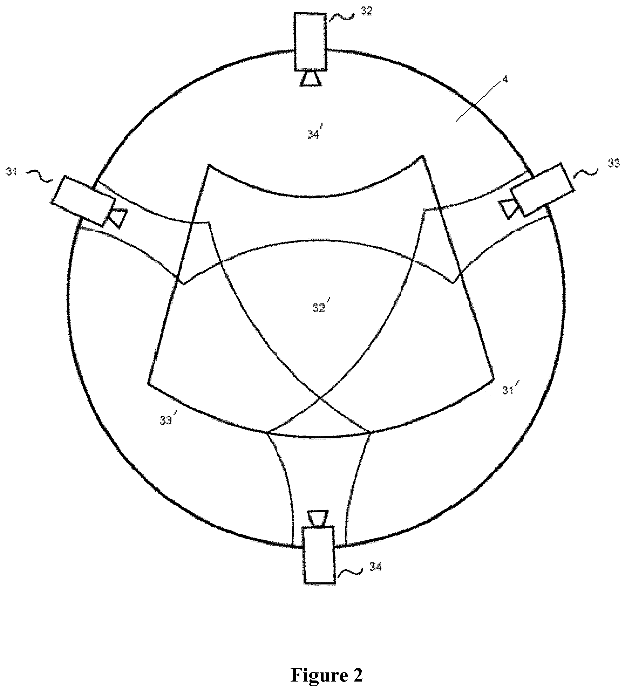

Figure 1 shows the arrangement of projectors, screen and tools to enter information about the on-screen image into the computer. The appliance includes a computer 1 with installed software, and a camera 2 and projectors 3 connected thereto. The appliance also includes a screen 4 with a curvilinear (i.e. spherical) surface to display video content. The PC comprises a video input 6 to capture source video. A remote-control unit 5 is connected to the PC by means of a radio module 7 to manage software modules. Fig. 2 shows an approximate arrangement of four projectors for projecting onto a spherical screen.

As an example, let us consider the functioning of a device to which projectors 31, 32, 33, and 34 are connected. Each projector forms its own image fragment 31', 32', 33', and 34' on the screen 4 and overlays with other projectors 31-34. Together, these projectors cover the entire surface of screen 4. To be specific, let us assume that the image is formed by identical projectors 31, 32, 33, and 34 with equal matrices which are w pixels wide and h pixel high. The image formed on the screen by the camera is transferred to the computer 5. The camera 2 can be a high-resolution digital camera, a professional camera, a digital matrix, etc., with a lens that covers either the entire surface of the screen (i.e. if a single camera is used), or a part of the surface (if several cameras are used, e.g., a circular fisheye lens).

The camera 2 is installed and set up before starting calibration. Let us consider a camera covering 100% of the screen's surface being installed in the sphere's center. 100% coverage of the spherical screen's surface can be achieved using a 360°xl80° circular fisheye lens.

Calibration begins by making a test snapshot of the screen when all the projector's pixels light maximum white. The snapshot is transferred to the computer and output to the control device. If a visual test shows that the camera and projectors have been installed correctly, calibration can begin. The first step is to display a sharp high-contrast picture on the screen to automatically set up focus, if this is supported by the lens and camera. If automatic focus setup is not supported, this is done manually. Next, templates are displayed in succession on each projector using the server and installed software. The camera makes snapshots of these templates and transfers them to the computer for analysis.

The software analyzes the snapshots, determines the borders of each projector's ambient light area, and saves the results in files. Using a series of templates, we can determine the screen orientation, projector connection sequence and possible geometrical distortions on the screen's surface. Based on the information obtained at the first calibration stage, precise coordinates of the overlays are defined, and simple filters are created to compensate for light intensity in the overlay areas, and shaders are created to compensate for geometrical distortions.

Most projectors do not have limitless contrast and equal light intensity in all colors. The purpose of the second calibration stage is to eliminate ambient light from projectors and/or other sources in conditions of extreme darkness. The camera makes a series of snapshots with different exposure lengths and transfers them to the computer for analysis. The software identifies intense ambient light areas and creates new templates to be displayed on the screen. By gradually increasing the brightness of other areas, ambient light can be evenly distributed across the entire screen or part of the screen. Upon completion of the calibration's second stage, we create separate filters for each projector based on the border data obtained at the first stage.

Then we move on to calibration to eliminate uneven distribution of light flux across the screen's surface. Based on filters created at the first stage of calibration, we display white picture on the screen and make a series of snapshots with different exposures. We use these snapshots to build a new template and display it on the screen. Using the new templates, we achieve even light flux intensity distribution across the entire screen by gradually lowering the brightness of overlap areas with other projectors and areas where light flux is denser. Upon completion of the calibration's third stage, we create separate filters for each projector based on the border data obtained at the first stage. In case the result is not satisfactory, we perform calibration to compensate for differences in color gamuts or white light brightness gain of projectors. This calibration stage must be performed after the first stage, because the calibration at other stages is adjusted based on the data obtained. The process starts with determining an overlay-free area for each projector. Next, color templates with various light intensities and color tones are projected in these areas. Based on the snapshots made with the camera, color filters are built which can compensate for color gamut variances and adjust subsequent calibration stages.

Upon completion of calibration, all created filters and files for compensating geometry distortion are saved on the disk.

When the software is launched, the filters and shader files are transferred to the GPU and used to adjust the real-time image received by the projectors. On command from the external controller, the built-in playback module begins to play back the prepared video and audio files recorded on the disk.

Files are prepared by special-purpose software as follows. A video sequence or file is fed to the coded program's input, and each frame is split into several parts. For example, a frame in 4K resolution (3840x3840) can be fed to the input. The program cuts the frame into eight equal parts of 1920x960 and the generated files are encoded with the selected codec (for instance, MPEG2). This method can evenly distribute the decoding load across all CPU cores. After that, each video file is encrypted with one or more keys depending on the content distribution policy and license type. For convenience, the generated video files, audio files, description files and auxiliary files are packaged into a single file which is then loaded onto the computer's disk. When the content file is loaded into the computer, it is unpacked at the server side and resides on the disk as a folder containing encrypted files. Depending on the distribution policy of this video file, a license file may be generated; this an encrypted text document which contains the distribution policy and technical information. The license file is loaded onto the server and decrypted using internal keys. Because each computer is assigned unique identifier keys, private keys, public keys and reference time are stored in an external information security device, then a license for a specific file and a specific system can be generated based on the public and private keys of the user and the system. Because reference time is only stored on an external hacker-resistant device equipped with its own permanent memory, we can generate time-limited or playback-limited licenses. To operate, the system only requires one server and a capture card installed, which is a device with a Thunderbolt, HDMI, DP, DVI or other port to receive an input signal. The server software can connect to the capture device and redirect the stream via the system's masks and filters, which enables playback in real time static or dynamic high-resolution images captured from other devices such as computers, laptops, smartphones, videocameras, video and audioboards, etc. The system also makes it possible to increase the number of capture cards, thus boosting throughput and total resolution.

The manual part of the system setup comes down to positioning projectors, focusing the image, and installing a camera. Further system setup is carried out once automatically during installation, or when the position of the projectors and/or screens is changed, the lamp is replaced, etc.

The proposed technical solution provides the following advantages over the known devices of similar purpose:
1. No need to accurately position the projectors
2. One server is sufficient for the system to run
3. Set-up and control are simple
4. Wireless sensory control
5. Ideal video and audio synchronization due to keeping all files on one server, parallel video and audio stream decoding, and GPU acceleration
6. No delays, lost frames or image flickering thanks to GPU vertical synchronization and fast disk subsystem
7. Automatic calibration of geometric distortions, smooth transitions between projectors, alignment of brightness, gamut and ambient light.
8. The number of projectors can be increased or decreased to achieve the required image resolution and brightness
9. Support for all projector types
10. Elimination of serious issues associated with traditional projectors with regard to distortions introduced by optics, such as spherical and chromatic aberrations, barrel-shaped or cushion-shaped distortions, etc.
11. Automatic elimination of equipment aging effects during set-up of the projectors.
12. Defective pixels emerge in traditional projectors over time. If such a pixel is located in a zone overlapping with another projector, defective pixels are automatically excluded at the calibration stage because they produce a zero-intensive spot.
13. No need to prepare content for each projector individually.
14. Unprecedented reliability.
15. Content protection system allowing to control time or number of playbacks.
16. Easy to prepare and load content.
17. High resolution video stream capturing in real time.
18. Setting up projection using software is much faster, cheaper, more precise, agile and efficient than tuning equipment with mechanical controls.
19. A device consisting of a computing system, a camera, and a digital projector set up to generate on-screen images according to the information obtained from the computing system. Special aspects of this device are that a camera is used to record on-screen image information in the computing system's memory; the device can calibrate multiple digital projectors; the computing system can process the obtained on-screen image information and, based on the required full image on the screen, feed information about images to be displayed into each projector.
20. Encrypted content files can be opened and decoded using licenses.

## Claims

1. An appliance for playing back a licensed high-resolution content on a curvilinear surface, including a computer, a machine-readable media containing a software for a calibration and the playback of audio and video from a hard drive, a video input for an image capturing, a software for a content preparation or an access to a database of prepared files, a video input, HDMI, DVI, DP, SDI interconnect cables, at least two projectors, RS-232 and Ethernet projector control cables, a screen with a curvilinear surface, at least one mechanism for obtaining test images while transferring the content from the projectors to the screen, a remote control system, a computing device including at least one processor which supports
dividing a video image source frame into two or more parts and subsequent encoding of these parts with a codec,
encrypting each part of the video image with at least one license key, packaging all encrypted video image parts into a single packaged file, a memory device to store the packaged file, a machine-readable media with a license file for the packaged file, an unpackaging tool, a file decoding module and an autocalibration module which supports creating filters for each projector to compensate light intensity in overlay areas, a shader to compensate geometric distortions on the screen's surface, a filter to compensate ambient light, a filter to compensate color gamut differences, a memory device to store obtained filters and a playback module.

2. A method of a high-resolution licensed content playback, including steps where a source video image is obtained and divided into parts; each part is encrypted using a computing system and transferred into a calibration module which creates, for each projector, a mask and a filter to compensate for light intensity in overlay areas, a shader to compensate for geometrical distortions on a screen's surface, a filter to compensate for ambient light from projectors, and a filter to compensate for color gamut differences; the corresponding filters are applied on each projector, and parts of the video image are projected onto a screen by each corresponding projector.

3. A content encryption method used to implement the method of claim 2, including steps where the source video image is obtained and divided into frames; each frame is divided into at least two parts which are encoded with a codec and encrypted with at least one license key; all encrypted video image parts are packaged into a single recorded file which is recorded to a memory device; this memory device with the recorded file and the memory device which holds a license file for the recorded file are simultaneously connected to a PC; the recorded file is unpacked and decoded, and a decoded stream is transferred to an autocalibration module.
